# EUROPEAN PATENT APPLICATION

(11) **EP 4 039 528 A1**
(43) Date of publication of application: **10.08.2022**
(21) Application number: 22155306.8
(22) Date of filing: 07.02.2022
(51) Int. Cl.: B60L 53/16, B60Q 1/00, F21V 1/00, H01R 13/00, H05B 47/00

(54) **SPOTLIGHT MODULAR ASSEMBLY FOR CHARGING INLETS**

(30) Priority: 08.02.2021 IT 202100002699
(71) Applicant: TE Connectivity Italia Distribution S.r.l., 10093 Collegno (TO) (IT)
(72) Inventor: SPINCICH, Demis, 78636 Torino (IT); SPOLVERATO, Arianna, 78636 Torino (IT)
(74) Representative: Grünecker Patent- und Rechtsanwälte PartG mbB

(57) **Abstract**

A spotlight modular assembly for providing external illumination to a charging inlet is provided, wherein the spotlight modular assembly comprises a first frame and a second frame encapsulating a circuit carrier and an illumination source electrically connected to the circuit carrier and the spotlight modular assembly is configured so that the light of the illumination source comes out from the spotlight modular assembly. The spotlight modular assembly is configured to be reversibly attached to the external frame of the charging inlet, in such a way that the light of the illumination source is directed towards the charging inlet and the first frame is provided with locking means for securing the spotlight modular assembly to the charging inlet. The charging inlet may be the charging inlet of a power-receiving unit of an electric vehicle or of a powersupplying unit of a charging station.

## Description

### FIELD OF THE INVENTION

The present invention refers to the field of electric vehicles. In particular, the present invention relates to the field of illumination systems for charging inlets of electric vehicles.

### STATE OF THE ART

It is known at the state of the art to provide a charging inlet of an electric vehicle-charging unit with an illumination system for illuminating the outside of the charging inlet. The illumination system may be used to facilitate the insertion of the charging plug and/or to indicate the charging status of the charging inlet.

It is also known at the state of the art to produce illumination systems comprising a LED connected to a printed circuit board (PCB) and to place them on the rear part of the charging inlet. For instance, document KR 2012 0 064450 A discloses an illumination system comprising a LED unit and a series of optical lenses which is integrally formed with the charging inlet. On the other hand, document US 2017/0149 176 A1 describes a LED unit which is fixed to the back of the charging inlet by means of screws.

The main drawback of these configurations lies in the need to provide the illumination system with a light guide material for directing the light emitted by the rear LED towards the front charging inlet, which increases the production costs. Moreover, since the illumination system is placed on the back part of the charging inlet, it cannot be reached from the outside once the charging inlet is inserted into the charging unit, hence the handling and the substitution of the illumination components in case of failure is difficult in this configuration. Finally, the illumination system according to this arrangement cannot be adapted to existing housings, but, on the contrary, it is required that the charging inlet is specifically designed so as to accommodate a LED connected to a PCB.

Other configurations known at the state of the art comprise a light emitting source, which is directly built on the outside of a charging inlet of an electric vehicle. For instance, document US 2013/0134937 A1 discloses an illumination light source, for example a LED lamp, which is embedded in an upper peripheral wall of the housing recess of the charging device and which emits white light downward towards the charging inlet. Also in these cases, the illumination system has to be integrally formed with the charging inlet of the electric vehicle; in particular, it must be integrated in the housing recess of the charging unit. Therefore, if a single part of the illumination system needs to be replaced or adjusted, the whole illumination system needs to be removed and replaced.

In order to solve the above stated issues, the present invention aims at providing a modular illumination unit, which can be easily assembled and built on a pre-existing charging inlet without need to adapt it and whose components can be easily removed and replaced in case of failure.

### SUMMARY

The present invention is based on the idea of providing a modular assembly comprising a case for containing an illumination source connected to a circuit carrier, which can be reversibly attached to the external frame of a charging inlet, for instance of an electric vehicle, and can be oriented in such a way that the light emitted by the illumination source can be directed towards the charging inlet.

According to an embodiment of the present invention, a spotlight modular assembly for providing external illumination to a charging inlet, comprising a first frame and a second frame, encapsulating a circuit carrier and an illumination source electrically connected to the circuit carrier, and configured so that the light of the illumination source comes out from the second frame of the spotlight modular assembly is provided. The spotlight modular assembly is configured to be reversibly attached to the external frame of the charging inlet, in such a way that the light of the illumination source is directed towards the charging inlet and the first frame is provided with locking means for securing the spotlight modular assembly to the charging inlet.

This configuration is particularly advantageous because the spotlight modular assembly can be used to illuminate the charging inlet in situations in which the surrounding environment is dark. For example, the charging inlet may be placed on a power-supplying connector or on a power-receiving connector of an electric vehicle and the spotlight modular assembly may be used to provide illumination during the night time. Thanks to its modularity, the spotlight modular assembly can be easily assembled and attached to the charging inlet and it can be easily removed and replaced in case of failure of a single component of the illumination system.

In a preferred configuration, the first frame and the second frame form a case having a first surface and a second surface. In the present application, the expression "first frame" and "first surface of the first frame" are used to indicate those elements placed further away from the external frame of the charging inlet, while the expressions "second frame" and "second surface of the second frame" are used to indicate those elements in contact with the external frame of the charging inlet. Preferably, the case has the shape of a parallelepiped and comprises four lateral surfaces, a top surface and a bottom surface.

In a preferred configuration, the first frame of the spotlight modular assembly comprises locking means, which are locked to the coupling means of the charging inlet, in order to stabilize the reciprocal position of the spotlight modular assembly and of the charging inlet. The second frame is placed between the first frame and the charging inlet and it is in contact with the charging inlet. The second frame is laser welded to the first frame in order to form a sealed and solid system. Preferably, the locking means comprise two locking means, each formed on one of two opposite lateral surfaces of the case; each locking mean comprises a hook that is locked to a corresponding coupling mean of the charging inlet.

In a preferred configuration, the spotlight modular assembly may be attached to the charging inlet by wedging it into a suitable slit formed on the external frame of the charging inlet and by securing it to the charging inlet by means of locking means.

Preferably, the first frame and the second frame are made in plastic.

According to a further embodiment of the present invention, a spotlight modular assembly for providing external illumination to a charging inlet is provided, wherein the second frame is made of a transparent material.

This configuration is particularly advantageous because, if the second frame is made of a transparent material, the light emitted by the illumination source can easily shine through the spotlight modular assembly and reach the charging inlet. Preferably, the second frame may be made of transparent plastic, for example polycarbonate.

Preferably, the second frame made of transparent material is put in contact with a slit specifically formed in the external frame of the charging inlet so that the light can reach the charging inlet.

According to a further embodiment of the present invention, a spotlight modular assembly for providing external illumination to a charging inlet is provided, wherein the second frame comprises at least one window made of transparent material.

This configuration has the advantage that the at least one transparent window lets the light of the illumination source to come out from the spotlight modular assembly.

Preferably, the one or more transparent windows are put in contact with one or more corresponding slits formed on the external frame of the charging inlet, so that the light emitted by the illumination source can shine through the spotlight modular assembly and can illuminate the charging inlet.

According to a further embodiment of the present invention, a spotlight modular assembly for providing external illumination to a charging inlet is provided, wherein the circuit carrier comprises a printed circuit board and the illumination source comprises a LED connected to the printed circuit board.

This configuration is particularly advantageous because the LED is charged by the PCB and the LED emission can be controlled via the electronics of the PCB and it can be used to illuminate the charging inlet for facilitating the insertion of the charging plug when the surrounding environment is dark. The illumination system comprising a LED and a PCB has also the advantage that it is simple and easy to use.

According to a further embodiment of the present invention, a spotlight modular assembly for providing external illumination to a charging inlet is provided, wherein one or more damping means are placed between the printed circuit board and the first frame, so as to reduce the mechanical stress to which the printed circuit board is subjected.

The advantage of placing damping means between the PCB and the first frame is that the damping means are configured to keep the PCB in a preferred position, but at the same time, they reduce the mechanical stress to which the PCB is subjected during operation and they prevent damages or structural failures in the PCB due to external vibrations.

According to a further embodiment of the present invention, a spotlight modular assembly for providing external illumination to a charging inlet is provided, wherein the damping means comprise at least two dampers.

The advantage of this configuration is that the dampers allow precise positioning of the PCB while reducing the mechanical stress to which the PCB is subjected.

In a preferred embodiment, the dampers are placed between the PCB and the first frame, in order to prevent direct contact of the PCB with the rigid frame, thus reducing the damages to the PCB.

According to a further embodiment of the present invention, a spotlight modular assembly for providing external illumination to a charging inlet is provided, wherein an electric connector is reversibly connected to the spotlight modular assembly for supplying power to the illumination source electrically connected to the circuit carrier.

The advantage of this configuration is that the connector can be easily connected and disconnected to the spotlight modular assembly to supply power to the circuit carrier and to the illumination source connected therein, therefore the configuration is highly versatile.

According to a preferred configuration, a first end of a cable inserted into the electric connector is connected to the spotlight modular assembly and a second end of the cable is connected to a control unit, for instance to the control unit of an electric vehicle or to a smart control unit.

According to a further embodiment of the present invention, a spotlight modular assembly for providing external illumination to a charging inlet is provided, wherein the connector is a small connector, for instance a NanoMQS connector.

The advantage of using small connectors, for instance NanoMQS connectors, to supply power to the circuit carrier and the illumination source is that they can be profitably adapted to supply power to an electric system having small dimensions.

Preferably, small connectors have receptacles having width dimensions comprised between 0.5 mm and 1 mm and depth dimensions comprised between 0.4 mm and 1 mm.

According to a further embodiment of the present invention, an external frame of a charging inlet of an electric vehicle configured to be coupled with a spotlight modular assembly as the ones described above is provided. The external frame comprises:
- an illumination slit for allowing passage of the light coming out from the second frame of the spotlight modular assembly, and
- coupling means configured to be locked to the locking means of the first frame and to reversibly fix the reciprocal position of the spotlight modular assembly and the external frame, when the second frame of the spotlight modular assembly is put in contact with the illumination slit.

The advantage of this configuration is that the external frame of the charging inlet of the electric vehicle is already provided with a modular illumination system and can be easily adapted to pre-existing charging inlets and facilitate illumination when the external environment is dark.

Preferably, the shape and size of the illumination slit are adjusted according to the shape and size of the second frame of the spotlight modular assembly, in order to maximize the amount of light emitted by the illumination system that can reach the charging inlet. Preferably, the illumination slit is placed on the upper part of the external frame and the spotlight modular assembly is mounted on the upper part of the external frame, so that its weight is advantageously supported by the external frame. In alternative embodiments, the spotlight modular assembly may be mounted on any preferred part of the external frame, for instance the lower part or the lateral parts. In this context, a preferred direction is defined by the gravity force and the "upper part" and the "lower part" of the frame are defined according to the direction of the gravity force: an object subjected to the gravity force would naturally fall from the "upper part" of the frame towards the "lower part" of the frame.

Preferably, said coupling means are hooks complementary to the hooks of the locking means.

According to a further embodiment of the present invention, a charging system for an electric vehicle comprising a spotlight modular assembly as the ones described above and a charging inlet is provided, wherein the charging inlet has an external frame with an illumination slit for allowing passage of the light coming out from the second frame of the spotlight modular assembly, and the second frame is put in contact with the illumination slit and the spotlight modular assembly is reversibly fixed to the charging inlet by means of the locking means.

This configuration is particularly advantageous because the light emitted by the illumination source of the spotlight modular assembly can be directed towards the charging inlet of the power-receiving unit and it can facilitate the insertion of the charging plug, for instance when the surrounding environment is dark. Moreover, another advantage of this configuration is that it allows easy handling and substitution of the modular assembly in case of failure. In fact, if a failure occurs in one of the electronics components of the circuit carrier and/or the illumination source, the entire modular assembly can be easily replaced.

The charging inlet may be for instance the charging inlet of a power-receiving unit of an electric vehicle or the charging inlet of a power-supplying unit of an electric vehicle.

Preferably, the spotlight modular assembly is positioned on the external frame of the charging inlet in such a way that the second frame is in contact with the illumination slit and the light coming out from the spotlight modular assembly passes through the illumination slit and illuminates the charging inlet. For example, the second frame may be provided with a protruding part configured to be wedged into the illumination slit of the charging inlet, in order to assure correct positioning of the two elements. The illumination slit may have any preferred shape, preferably rectangular. Preferably, the protruding part of the second frame may have the same shape as the illumination slit.

Preferably, the external frame of the charging inlet is provided with coupling means which are configured to be locked to the locking means of the spotlight modular assembly, in order to fix the reciprocal position of the two elements. For example, the coupling means may comprise hooks complementary to the ones of the locking means.

According to a preferred configuration, the spotlight modular assembly is placed on the upper part of the external frame of the charging inlet. In this way, the light shining through the spotlight modular assembly can be directed downwards, towards the electric vehicle-charging inlet. In alternative embodiments, the spotlight modular assembly may be attached to any preferred part of the external frame of the charging inlet, for instance it can be placed on the lower part of the external frame, or on the lateral parts of the external frame. In these configurations, the light needs to be directed toward the charging inlet accordingly. In the present application, the "upper part of the external frame of the charging inlet" indicates the part of the charging inlet directed toward the roof of the car and the "lower part of the external frame of the charging inlet" indicates the part of the charging inlet directed towards the wheels of the car.

According to a further embodiment of the present invention, a system is provided, wherein the second frame is provided with at least one window made of transparent material and the second frame is put in contact the illumination slit of the external frame in such a way that the at least one window is aligned with the illumination slit.

This configuration has the advantage that the light of the illumination source passes through the transparent window of the second frame and through the illumination slit of the charging inlet and illuminates the charging inlet, thus facilitating plug insertion even when the external environment is dark.

Preferably, the window of transparent material of the second frame and the illumination slit are aligned so that each ray of light passing through the window of the second frame also passes through the illumination slit of the charging inlet, in order to assure better illumination.

For example, the second frame may have a protruding part configured to be wedged into the illumination slit of the charging inlet and that protruding part may be made of transparent material.

According to a further embodiment of the present invention, a system is provided, wherein the spotlight modular assembly is controlled directly by the electric vehicle on which the charging inlet is mounted.

This configuration is advantageous because the spotlight modular assembly can be automatically controlled by the body computer of the vehicle that gives the input when the external flap of the vehicle is opened by final user.

According to a further embodiment of the present invention, a system is provided, wherein the spotlight modular assembly is controlled by a smart electronic unit.

The advantage of this configuration is that a smart electronic unit connected to the electric vehicle can be used to control the spotlight modular assembly and to regulate the illumination of the charging inlet, while also regulating the charging status and the charging type of the charging inlet. The user can operate the smart electronic unit for example by means of push buttons. Preferably, power is supplied to the smart electronic unit by the electric vehicle to which the smart electronic unit is connected.

According to a further embodiment of the present invention, an electric vehicle comprising a system as the ones described above is provided.

The advantage of this configuration is that charging of the battery of the electric vehicle in dark environments and/or during night time is facilitated, because the charging inlet of the power-receiving unit may be profitably illuminated by means of the spotlight modular assembly.

According to a further embodiment of the present invention, a method for implementing a charging system as the ones described above in an electric vehicle is provided, wherein the method comprises the following steps:
- orienting the spotlight modular assembly so that the second frame is put in contact with the illumination slit;
- locking the spotlight modular assembly to the external frame of the charging inlet by exploiting the locking means;
- reversibly connecting an electric connector to the spotlight modular assembly in order to supply power to the illumination source electrically connected to the circuit carrier;
- connecting said electric connector also to a control unit.

This configuration is particularly advantageous because the light emitted by the illumination source of the spotlight modular assembly can be directed towards the charging inlet of the power-receiving unit and it can facilitate the insertion of the charging plug, for instance when the surrounding environment is dark.

In a preferred configuration, an electric connector may be connected to the spotlight modular assembly and a cable inserted into the electric connector may be used to supply power to the spotlight modular assembly. Preferably, the cable is also connected to a control unit, for charging and controlling the illumination source connected to the circuit carrier. For instance, the control unit may be the control unit of an electric vehicle or a smart control unit. The advantage of using an electric connector that is not integrated into the spotlight modular assembly is that the electric connector may be easily connected and disconnected.

Preferably, the spotlight modular assembly is oriented so that the second frame comprising the transparent frame is placed in contact with the charging inlet, preferably in correspondence to a slit of the charging inlet. The spotlight modular assembly is then wedged into the charging inlet and it is fixed to it by means of the locking means.

### FIGURES

The present invention will be described with reference to the attached figures in which the same reference numerals and/or signs indicate the same part and/or similar and/or corresponding parts of the machine. In the figures:
Figure 1 schematically illustrates a modular assembly for providing external illumination to a charging inlet, according to an embodiment of the present invention.
Figure 2 represents an exploded view of a modular assembly, according to an embodiment of the present invention.
Figure 3 schematically illustrates the insertion of a power supply connector into the modular assembly, according to an embodiment of the present invention.
Figure 4 schematically illustrates a charging system comprising a modular assembly attached to a charging inlet, according to an embodiment of the present invention.
Figure 5 schematically illustrates a charging system comprising an illumination system without any modular lighting assembly, according to prior art.

### DETAILED DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

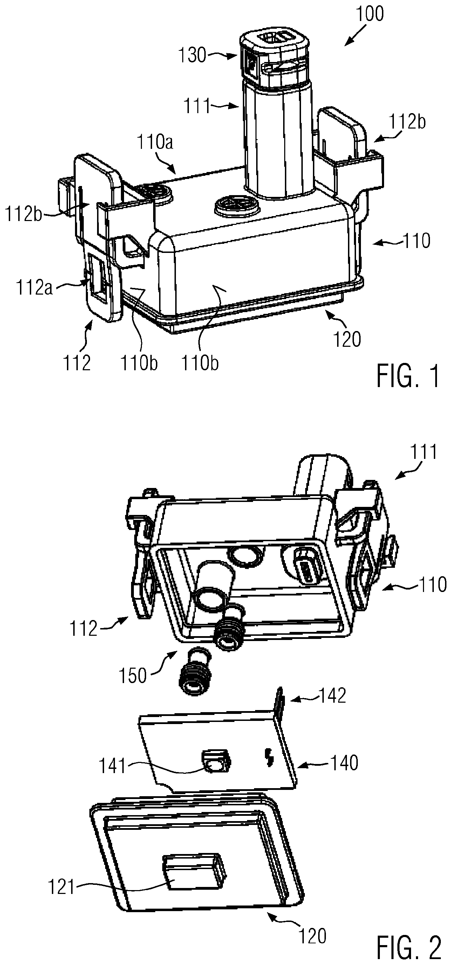

Figure 1 schematically illustrates a spotlight modular assembly 100 for providing external illumination to a charging inlet of a power-receiving unit or of a power-providing unit for an electric vehicle, according to an embodiment of the present invention. The spotlight modular assembly 100 comprises a first frame 110, provided with a vertical insertion pipe 111, and a second frame 120. The first frame 110 illustrated in Fig. 1 has the shape of an open parallelepiped, comprising an first surface 110a and four lateral surfaces 110b. Two opposite lateral surfaces 110b of the first frame 110 are provided with two locking means 112, one for each of the two opposite lateral surfaces. Each locking mean 112 comprises a flat portion 112b connected to the corresponding lateral surface 110b of the first frame 110 and a hook portion 112a configured to engage a mating component of the charging inlet. A vertical insertion pipe 111 for inserting an electric connector 130 is further formed on the first surface 110a.

The second frame 120 represents a "lid" for closing the first frame 110, thus forming a closed space in the spotlight modular assembly 100 for containing an illumination system. The second frame 120 is laser welded to the first frame 110.

The illumination system comprises a circuit carrier, for instance a printed circuit board (PCB), and a light source, for instance a LED, connected to the circuit carrier. The spotlight modular assembly 100 is configured so that the light emitted from the light source is directed towards the outside of the spotlight modular assembly 100, in particular, towards the charging inlet. The vertical insertion pipe 111 of the first frame 110 is designed to house an electrical connector 130 for supplying power to the illumination system of the spotlight modular assembly 100.

The first frame 110 and the second frame 120 are preferably made of a flexible material, for instance, a plastic material. The second frame 120 is preferably completely made of a transparent material so that the light emitted from the light source can come out from the spotlight modular assembly 100 and can reach the charging inlet. In an alternative embodiment, the second frame 120 may comprise at least a window made of transparent material for providing illumination to the charging inlet.

It is clear that, even if the first frame 110 represented in Fig. 1 has the shape of an open parallelepiped and the corresponding second frame 120 has a rectangular section, the first frame 110 and the second frame 120 of the spotlight modular assembly may have any preferred geometry, as long as they are configured to form a closed space for encapsulating the PCB and the LED. For example, the first frame 110 and the second frame 120 may have a circular section and they may be designed so as to be wedged the one into the other to form a closed space in which the PCB may be inserted.

The internal structure of the spotlight modular assembly 100 can be clearly seen in the exploded view of the spotlight modular assembly 100 in Figure 2. The first frame 110 comprises internal features apt at wedging it into the second frame 120 and it is additionally provided with two locking means 112 that allow fixing it to the external part of the charging inlet, as it will be described in more detail below. The second frame 120 is provided with a protruding element 121 for fixing it to a complementary part of the charging inlet.

The first frame 110 and the second frame 120 are hence wedged one into the other, to form a closed space for containing the PCB 140, which is connected to the LED 141 and to at least two electric pins 142 for providing electrical connection. In the configuration of Fig. 2, two dampers 150 are provided between the PCB 140 and the first frame 110, in order to reduce the mechanical stress to which the PCB 140 is subjected to, during operation. In fact, the dampers 150 prevent a direct contact between the PCB 140 and the first frame 110 made of a rigid material. The dampers 150 are inserted in corresponding receptacles 113 formed in the inner surface of the first frame 110. Even if Fig. 2 shows that two dampers are placed between the PCB 140 and the first frame 110, it is clear that any other damping means may be used in the spotlight modular assembly to reduce the mechanical stress of the PCB. Moreover, any number of dampers may be employed, for instance one, three, four or more.

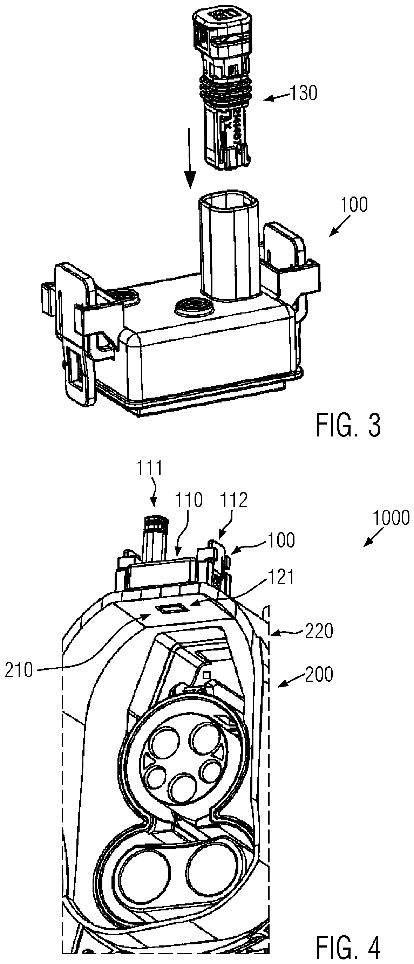

The external connector 130 may be used for supplying power to the electric pins 142 and hence to the PCB 140 and to the LED 141 connected to the PCB 140. The external connector 130 may have a receptacle having width dimensions comprised between 0.5 mm and 1 mm and depth dimensions comprised between 0.4 mm and 1 mm. For example, a NanoMQS connector with a two positioning terminal may be employed. The insertion of the power supply connector 130 into the vertical insertion pipe 111 of the spotlight modular assembly 100 is schematically represented in Figure 3. Preferably, a first end of the power supply connector 130 may be connected to the electric pins 142 of the PCB 140 and a second end of the power supply connector 130 may be connected to a cable, which, on its turn, is connected to a control system for charging and operating the spotlight modular assembly 100. For example, the control system may be the control unit of an electric vehicle or a smart unit.

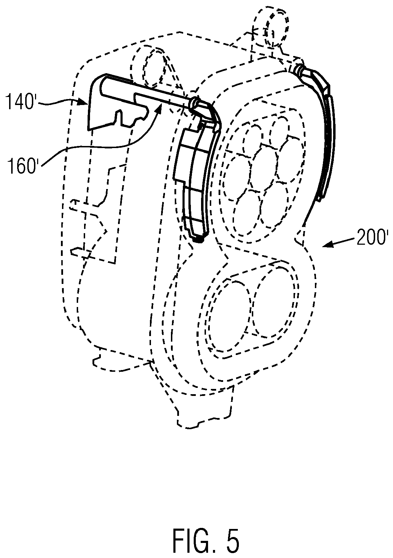

Figure 4 shows a charging system 1000 for an electric vehicle comprising a spotlight modular assembly 100 and a charging inlet 200 of the power-receiving unit of an electric vehicle, according to a preferred embodiment of the present invention. This configuration may be compared with a typical charging system employed in an electric vehicle according to prior art, which is represented in Figure 5.

As shown in Figure 4, the external frame 220 of the charging inlet 200 of the electric vehicle is provided with an illumination slit 210. The illumination slit 210 allows the light coming from the spotlight modular assembly 100 to reach the charging inlet 200. In this way, the insertion of the charging plug into the charging inlet 200 in conditions in which the external environment is dark is facilitated. The size and the shape of the illumination slit 210 may be adjusted according to the size and the shape of the second frame 120 of the spotlight modular assembly 100, in order to maximize the amount of light emitted by the LED illumination source and coming out from the spotlight modular assembly 100 that can be directed towards the charging inlet 200. Moreover, the protruding element 121 of the second frame 120 may be used for wedging the second frame 120 into the illumination slit 210 of the charging inlet 200 and to prevent reciprocal movements of the two elements during operation. For example, the protruding element 121 and the second frame 120 may have a rectangular section to facilitate insertion of the components.

To the contrary, in standard configurations according to prior art, the PCB comprising the LED is placed on the rear part of the charging inlet 200'. For instance, in the configuration of Figure 5, the PCB 140' is placed on the top, back part of the charging inlet 200'. In this case, a light guide material 160' needs to be employed to direct the light emitted by the LED on the PCB 140' towards the front part of the charging inlet 200', in order to illuminate it.

Therefore, production costs are increased due to the introduction of the light guide material 160'. Furthermore, it is necessary that the illumination system comprising the PCB 140' and the light guide material 160' is integrally formed with the charging inlet 200' of the charging unit, thus making it difficult to remove and replace the components in case of failure or for normal maintenance. Moreover, the illumination systems known at the state of the art cannot be adapted to the customer's specific requests, because they are designed to be adapted to the existing configuration of the charging inlet.

The spotlight modular assembly 100 according to the present invention may be instead specifically designed for meeting the customer requests thanks to the ease of assembling and of handling the different components.

The spotlight modular assembly 100 is assembled by inserting the PCB 140 connected to the LED 141 into the second frame 120 and by inserting the dampers 150 into the corresponding receptacles 113 of the first frame 110. Once the first frame 110 is laser welded to the second frame 120, the spotlight modular assembly 100 is ready for being attached to the charging inlet 200 of the electric vehicle, as shown in Figure 4.

As it is shown in Fig. 4, the second frame 120 is fixed to the charging inlet 200 by inserting the protruding element 121 into the corresponding slit 210 of the external frame 220 of the charging inlet 200. The first frame 110 is further fixed to the external frame 220 of the charging inlet 200 by means of the locking means 112: the user must press the flat portion 112a of each locking mean 112 to allow the hooking portions 112b to be locked to the corresponding coupling means of the charging inlet 200. In this way, also the second frame 120, which is placed between the first frame 110 and the external frame 220 and is in contact with the external frame 220, is advantageously stabilized by the locking means 112 of the first frame 110. In fact, the second frame 120 results to be pressed by the first frame 110 onto the external frame 220. In this way, even a more secure holding is assured.

Although it is illustrated in Figure 4, that the spotlight modular assembly 100 is placed on the upper part of the charging inlet 200, it is clear that it can be placed in any part of the charging inlet 200, provided that a slit is formed on that part of the charging inlet 200, in order to allow the light coming from the spotlight modular assembly 100 to reach the charging inlet 200. For instance, the spotlight modular assembly 100 may be placed on any of the sides of the charging inlet 200 or even on the bottom of the charging inlet 200, according to specific customer requests.

In the instance of failure of a component of the spotlight modular assembly 100, the entire system 100 can be easily removed and substituted. In this way, there is no need to remove and replace the whole charging inlet 200 because of a failure of a single component in the spotlight modular assembly 100, which occurs in illumination systems 200' according to prior art.

The spotlight modular assembly 100 according to the present invention can be controlled directly by the electric vehicle or it can be controlled by a smart unit provided in the electric vehicle. In this way, once the PCB receives the corresponding signal from the vehicle or from the smart unit, the LED is induced to emit light to illuminate the charging inlet 200. Light can be thus easily seen by the user from the outside.

While the invention has been described with respect to the preferred physical embodiments constructed in accordance therewith, it will be apparent to those skilled in the art that various modifications, variations and improvements of the present invention may be made in the light of the above teachings and within the purpose of the appended claims without departing from the spirit and intended scope of the invention.

For example, even if it is shown in Figure 4 that the spotlight modular assembly 100 is placed on the charging inlet 200 of the power-receiving unit of an electric vehicle, it is clear that the spotlight modular assembly 100 may alternatively be placed on the charging inlet 200 of the power-supplying unit of a charging station.

In addition, those areas in which it is believed that those of ordinary skill in the art are familiar, have not been described herein in order not to unnecessarily obscure the invention described. Accordingly, it must be understood that the invention is not to be limited by the specific illustrative embodiments, but only by the scope of the appended claims.

### LIST OF REFERENCES

- 100:: spotlight modular assembly
- 110:: first frame
- 110a:: upper surface
- 110b:: lateral surfaces
- 111:: spotlight/tube
- 112:: locking mean
- 112a:: hook portion of the locking mean
- 112b:: flat portion of the locking mean
- 113:: receptacles for dampers
- 120:: second frame
- 121:: protruding element
- 130:: electric connector
- 140:: circuit carrier
- 140':: circuit carrier of prior art
- 141:: illumination source
- 142:: electric pins
- 150:: dampers
- 160':: light guide material
- 200:: charging inlet
- 200':: charging inlet of prior art
- 210:: illumination slit
- 220:: external frame of charging inlet
- 1000:: charging system

## Claims

1. A spotlight modular assembly (100) for providing external illumination to a charging inlet (200),
said spotlight modular assembly (100) comprising a first frame (110) and a second frame (120) encapsulating a circuit carrier (140) and an illumination source (141) electrically connected to said circuit carrier (140),
said spotlight modular assembly (100) being configured so that the light of said illumination source (141) comes out from said second frame (120),
wherein said spotlight modular assembly (100) is configured to be reversibly attached to the external frame (220) of said charging inlet (200) in such a way that the light of said illumination source (141) is directed towards said charging inlet (200)
and wherein said first frame (110) is provided with locking means (112) for securing said spotlight modular assembly (100) to said charging inlet (200).

2. The spotlight modular assembly (100) according to claim 1, wherein said second frame (120) is made of a transparent material.

3. The spotlight modular assembly (100) according to claim 1, wherein said second frame (120) comprises at least one window made of transparent material.

4. The spotlight modular assembly (100) according to any of previous claims, wherein said circuit carrier (140) comprises a printed circuit board and said illumination source (141) comprises a LED connected to said printed circuit board.

5. The spotlight modular assembly (100) according to any of previous claims, wherein one or more damping means (150) are placed between said circuit carrier (140) and said first frame (110), so as to reduce the mechanical stress to which said circuit carrier (140) is subjected.

6. The spotlight modular assembly (100) according to claim 5, wherein said damping means (150) comprise at least two dampers.

7. The spotlight modular assembly (100) according to any of previous claims, wherein an electric connector (130) is reversibly connected to said spotlight modular assembly for supplying power to said illumination source (141) electrically connected to said circuit carrier (140).

8. The spotlight modular assembly according to claim 7, wherein said connector (130) is a small connector, for example a connector having receptacles having width dimensions comprised between 0.5 mm and 1 mm and depth dimensions comprised between 0.4 mm and 1 mm, for instance a NanoMQS connector.

9. An external frame (220) of a charging inlet (200) of an electric vehicle configured to be coupled with the spotlight modular assembly (100) according to any of previous claims 1 to 8, said external frame (220) comprising:
an illumination slit (210) for allowing passage of the light coming out from said second frame (120) of said spotlight modular assembly (100), and
coupling means configured to be locked to said locking means (112) of said first frame (110) and to reversibly fix the reciprocal position of said spotlight modular assembly (100) and said external frame (220), when said second frame (120) is put in contact with said illumination slit (210).

10. A charging system (1000) for an electric vehicle comprising the spotlight modular assembly (100) according to any of previous claims 1 to 8 and a charging inlet (200),
said charging inlet (200) having an external frame (220) with an illumination slit (210) for allowing passage of the light coming out from said second frame (120) of said spotlight modular assembly (100),
wherein said second frame (120) is put in contact with said illumination slit (210) and said spotlight modular assembly (100) is reversibly fixed to said charging inlet (200) by means of said locking means (112).

11. The charging system (1000) according to claim 10 when depending on claim 3, wherein said at least one window made of transparent material of said second frame (120) is aligned with said illumination slit (210).

12. The charging system (1000) according to any of claims 10 or 11, wherein said spotlight modular assembly (100) is controlled directly by said electric vehicle.

13. The charging system (1000) according to any of claims 10 or 11, wherein said spotlight modular assembly (100) is controlled by a smart electronic unit.

14. An electric vehicle comprising a charging system (1000) according to any of claims 10 to 13.

15. A method for implementing a charging system (1000) according to any of claims 10 to 13 in an electric vehicle, said method comprising the following steps:
- orienting said spotlight modular assembly (100) so that said second frame (120) is put in contact with said illumination slit (210);
- locking said spotlight modular assembly (100) to said external frame (220) of said charging inlet (200) by exploiting said locking means (112);
- reversibly connecting an electric connector (130) to said spotlight modular assembly in order to supply power to said illumination source (141) electrically connected to said circuit carrier (140);
- connecting said electric connector (130) to a control unit.
